# EUROPEAN PATENT APPLICATION

(11) **EP 4 818 778 A1**
(43) Date of publication of application: **07.10.2026**
(21) Application number: 24919840.9
(22) Date of filing: 01.11.2024
(51) Int. Cl.: G02B 6/126, G02B 6/122, G02B 6/124, G02B 6/136

(54) **THIN FILM LITHIUM NIOBATE POLARIZER AND MANUFACTURING METHOD THEREFOR**

(30) Priority: 26.01.2024 CN 202410115237
(71) Applicant: Accelink Technologies Co., Ltd., Wuhan, Hubei 430000 (CN)
(72) Inventor: ZHANG, Yu, Wuhan, Hubei 430000 (CN); LIANG, Xuerui, Wuhan, Hubei 430000 (CN); YU, Qianchen, Wuhan, Hubei 430000 (CN); CHEN, Honggang, Wuhan, Hubei 430000 (CN); ZHANG, Bo, Wuhan, Hubei 430000 (CN); LUO, Yong, Wuhan, Hubei 430000 (CN); MA, Weidong, Wuhan, Hubei 430000 (CN); HU, Qianggao, Wuhan, Hubei 430000 (CN); CHEN, Xun, Wuhan, Hubei 430000 (CN); YAN, Wei, Wuhan, Hubei 430000 (CN)
(74) Representative: Patentgruppen A/S
(86) International application number: PCT/CN2024/129326
(87) International publication number: WO 2025/156760

(57) **Abstract**

A thin film lithium niobate polarizer and a manufacturing method therefor are disclosed. The thin film lithium niobate polarizer includes a substrate layer, an optical waveguide layer and an upper cladding layer. The optical waveguide layer includes a light input port, a light output port, a slab layer and a ridge waveguide layer disposed on the slab layer. The ridge waveguide layer includes at least one transmission waveguide segment, with connecting waveguide segments symmetrically connected to both ends of the transmission waveguide segment. The transmission waveguide segment filters transverse magnetic mode light from a laser signal and outputs transverse electric mode light via another connecting waveguide segment and the light output port, thereby achieving separation of transverse electric and transverse magnetic components and obtaining pure transverse electric mode light. The thin film lithium niobate platform enables reduced device dimensions for integration and miniaturization. A standard semiconductor process reduces manufacturing costs and improves mass production capability.

## Description

### CROSS-REFERENCE

The present application claims priority from Chinese Patent Application No. 202410115237.8 filed on 26 January, 2024, entitled "THIN FILM LITHIUM NIOBATE POLARIZER AND MANUFACTURING METHOD THEREFOR."

### TECHNICAL FIELD

The present invention relates to the field of optical communication technology, in particular to a thin film lithium niobate polarizer and a manufacturing method therefor.

### BACKGROUND

Driven by the demand for massive data transmission in data centers, long-haul coherent optical communication technologies are gradually being deployed in cost-sensitive and energy-sensitive short-reach interconnection applications. Polarization manipulation technology can effectively reduce the cost and power consumption of short-reach coherent optical communication systems.

With the vigorous development of optoelectronic integration, integration and chip-scale implementation have become important development trends for optical polarization control devices. Conventional polarizers are bulky, which hinders device miniaturization and results in high manufacturing costs. Lithium niobate materials exhibit advantages such as low insertion loss and high refractive index, and most high-performance polarization control devices currently employ lithium niobate crystals. However, optical waveguides fabricated from conventional lithium niobate crystals suffer from low refractive index contrast and weak optical field confinement, leading to large device dimensions that fail to meet integration requirements. Compared with conventional polarizers, thin film lithium niobate polarizers have smaller waveguide dimensions and stronger optical confinement, thus being more suitable for miniaturized and integrated communication applications. At present, there is no mature solution that can realize high polarization extinction ratio lithium niobate waveguides on-chip in a simple and efficient manner.

In view of the above, overcoming the drawbacks of the prior art has become an urgent technical problem in the art.

### SUMMARY

The technical problem to be solved by the present invention is how to implement a high polarization extinction ratio waveguide on a thin film lithium niobate platform in a simple and low-cost manner.

The present invention adopts the following technical solutions.

In a first aspect, a thin film lithium niobate polarizer is provided, comprising a substrate layer, an optical waveguide layer, and an upper cladding layer, wherein the optical waveguide layer is disposed between the substrate layer and the upper cladding layer.

The optical waveguide layer includes a light input port, a light output port, a slab layer, and a ridge waveguide layer, the ridge waveguide layer being disposed on the slab layer. The ridge waveguide layer comprises at least one transmission waveguide segment, with connecting waveguide segments symmetrically connected to both ends of the transmission waveguide segment.

The light input port is configured to receive a laser signal and transmit the laser signal to the transmission waveguide segment via the connecting waveguide segments. The transmission waveguide segment is configured to filter transverse magnetic (TM) mode light from the laser signal and output transverse electric (TE) mode light from the laser signal via another connecting waveguide segment and the light output port.

Preferably, the connecting waveguide segment includes a straight waveguide segment and a tapered waveguide segment, the straight waveguide segment being connected to the tapered waveguide segment, and the tapered waveguide segment being connected to the transmission waveguide segment.

One end of the tapered waveguide segment has a width matching that of the straight waveguide segment, and the other end has a width matching that of the transmission waveguide segment.

Preferably, the polarizer further comprises a buffer layer disposed between the substrate layer and the optical waveguide layer.

The buffer layer and the upper cladding layer are made of silicon oxide or silicon dioxide.

The buffer layer and the upper cladding layer each have a thickness greater than 3 µm.

Preferably, the polarizer further comprises an extraction waveguide structure, and the transmission waveguide segment is arranged between the extraction waveguide structures.

The extraction waveguide structure is configured to extract TM mode light from the laser signal. The extraction waveguide structure has a width of 0.2 µm to 0.5 µm, and a distance of 2 µm to 3 µm from the transmission waveguide segment.

Preferably, the refractive index of the upper cladding layer is lower than that of the optical waveguide layer.

Preferably, the optical waveguide layer is made of lithium niobate. The slab layer has a thickness of 0.1 µm to 5 µm, and the ridge waveguide layer has a thickness of 0.1 µm to 5 µm.

Preferably, the light input port and the light output port are grating coupling structures.

In a second aspect, a method for manufacturing a thin film lithium niobate polarizer is provided, comprising: fabricating a substrate layer; forming a buffer layer, an optical waveguide layer, and an upper cladding layer on a surface of the substrate layer.

Preferably, forming the buffer layer, the optical waveguide layer, and the upper cladding layer on the surface of the substrate layer comprises: forming the buffer layer on an upper surface of the substrate layer; forming an optical waveguide material layer on the buffer layer; removing a portion of the optical waveguide material layer by an etching process to form the optical waveguide layer; forming the upper cladding layer to cover the optical waveguide layer.

Preferably, the etching process comprises inductively coupled plasma etching or reactive ion etching.

Compared with the prior art, the present invention has the following beneficial effects.

The present invention receives a laser signal via the light input port and transmits the laser signal to the transmission waveguide segment via the connecting waveguide segments. After passing through the transmission waveguide segment, TM mode light undergoes very high transmission loss, while TE mode light undergoes low transmission loss. Accordingly, TM mode light gradually attenuates, and TE mode light continues to propagate, thereby achieving separation of TE and TM components from the input laser signal and obtaining pure TE mode light. Meanwhile, the thin film lithium niobate platform enables reduced device dimensions, facilitating device integration and chip miniaturization. The use of standard semiconductor processes ensures mature technology, effectively lowering manufacturing costs and improving mass production capability.

### BRIEF DESCRIPTION OF THE DRAWINGS

In order to explain the technical solutions of the embodiments of the present invention or the prior art more clearly, the accompanying drawings required for describing the embodiments or the prior art are briefly described below. It is obvious that the drawings described below are merely some embodiments of the present invention, and those skilled in the art can obtain other drawings based on these drawings without inventive effort.
FIG. 1 is a schematic structural view of a thin film lithium niobate polarizer according to an embodiment of the present invention;
FIG. 2 is a schematic cross-sectional view of a thin film lithium niobate polarizer according to an embodiment of the present invention;
FIG. 3 is another schematic structural view of a thin film lithium niobate polarizer according to an embodiment of the present invention;
FIG. 4 is a schematic view illustrating the relationship between the number of transmission waveguide segments and the extinction ratio of the polarizer according to an embodiment of the present invention;
FIG. 5 is a schematic view illustrating the relationship between the width of the ridge waveguide layer and the loss of TE mode light and TM mode light, respectively, according to an embodiment of the present invention;
FIG. 6 is a schematic view of the electric field intensity distribution for TE mode light at a waveguide width of 0.4 µm according to an embodiment of the present invention;
FIG. 7 is a schematic view of the electric field intensity distribution for TM mode light at a waveguide width of 0.4 µm according to an embodiment of the present invention;
FIG. 8 is a schematic structural view of a connecting waveguide segment according to an embodiment of the present invention;
FIG. 9 is a schematic structural view of an extraction waveguide structure according to an embodiment of the present invention;
FIG. 10 is a specific schematic structural view of a thin film lithium niobate polarizer according to an embodiment of the present invention;
FIG. 11 is a more specific schematic structural view of a thin film lithium niobate polarizer according to an embodiment of the present invention;
FIG. 12 is a schematic flowchart of a method for manufacturing a thin film lithium niobate polarizer according to an embodiment of the present invention;
FIG. 13 is a detailed schematic flowchart of a method for manufacturing a thin film lithium niobate polarizer according to an embodiment of the present invention;
FIG. 14 is a schematic structural view of a method for manufacturing a thin film lithium niobate polarizer according to an embodiment of the present invention.

### DETAILED DESCRIPTION

To further clarify the objects, technical solutions and advantages of the present invention, a detailed description is given below with reference to the accompanying drawings and embodiments. It should be understood that the specific embodiments described herein are intended only to explain the present invention and are not intended to limit it.

Terms such as "first" and "second" used in the present invention are for descriptive purposes only and are not to be construed as indicating or implying relative importance or the number of indicated technical features. Thus, a feature defined as "first" or "second" may explicitly or implicitly include one or more such features. In the description of the present invention, "plurality" means two or more unless otherwise specified.

In the present invention, unless otherwise explicitly specified or limited, the term "connected" is to be interpreted broadly, for example, as fixedly connected, detachably connected or integrally connected; it may be directly connected or indirectly connected via an intermediate medium.

In addition, the technical features of the various embodiments of the present invention may be combined with each other provided that no conflict arises.

### Embodiment 1:

Implementing a high polarization extinction ratio waveguide on a film lithium niobate platform mainly involves optimizing waveguide design and manufacturing processes to improve polarization state control and extinction performance. Precise design of waveguide width, height and shape optimizes polarization mode propagation characteristics, thereby increasing the polarization extinction ratio. Ridge waveguides improve control over TE and TM modes by providing tailored refractive index contrast, thereby enhancing polarization extinction. The use of high-purity, low-defect materials reduces scattering and absorption during light propagation, thereby increasing the extinction ratio. Precise photolithography and etching processes are critical for fabricating waveguides with accurate dimensions, minimizing manufacturing irregularities and improving polarization selectivity.

Furthermore, temperature fluctuations affect the optical properties of lithium niobate; therefore, precise temperature control stabilizes the polarization performance of the waveguide. Proper packaging protects the waveguide from external disturbances, reducing polarization mode mismatch caused by mechanical stress. Adopting simple and effective manufacturing processes, such as standard photolithography and etching, reduces production costs. Standardized design and mass production of waveguide components significantly reduce unit costs.

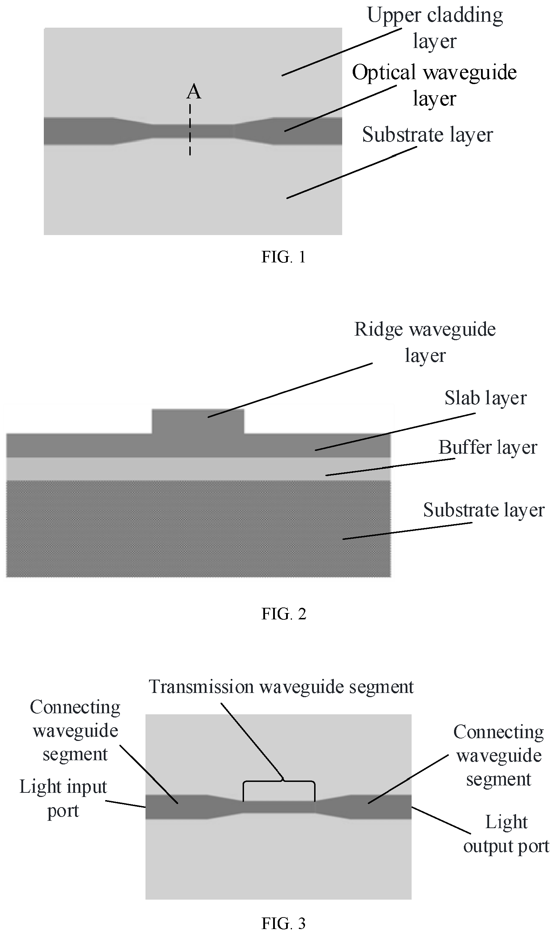

In this embodiment, a thin film lithium niobate polarizer is proposed, as shown in FIG. 1, comprising a substrate layer, an optical waveguide layer and an upper cladding layer, wherein the optical waveguide layer is disposed between the substrate layer and the upper cladding layer. With reference to FIGS. 2 and 3, the optical waveguide layer includes a light input port, a light output port, a slab layer and a ridge waveguide layer, the ridge waveguide layer being disposed on the slab layer. The ridge waveguide layer comprises at least one transmission waveguide segment, with connecting waveguide segments symmetrically connected to both ends of the transmission waveguide segment. The light input port is configured to receive a laser signal and transmit the laser signal to the transmission waveguide segment via the connecting waveguide segments. The transmission waveguide segment is configured to filter TM mode light from the laser signal and output TE mode light from the laser signal via another connecting waveguide segment and the light output port.

The substrate layer is the base structure of the polarizer, providing stable support for the entire device. The substrate layer is typically made of materials with good mechanical stability and low optical loss, including elemental semiconductor materials, III-V compound semiconductor materials, II-VI compound semiconductor materials or organic semiconductor materials, which are not specifically limited in this embodiment.

The optical waveguide layer is the core part of the polarizer, located between the substrate layer and the upper cladding layer, which is arranged above the optical waveguide layer to protect it. The upper cladding layer is made of a transparent material with a suitable refractive index; preferably, the refractive index of the upper cladding layer is lower than that of the optical waveguide layer. The waveguide operates based on refractive index contrast: when the optical waveguide layer has a higher refractive index than the surrounding materials, light is confined within the optical waveguide layer by total internal reflection. Light entering a low-refractive-index medium from a high-refractive-index medium at an angle greater than the critical angle undergoes total internal reflection back into the high-refractive-index medium. In optical waveguides, this total internal reflection ensures that light propagates along the waveguide without leaking into the surrounding low-refractive-index materials, thereby improving transmission efficiency.

The slab layer provides a base light propagation path and helps maintain stable light transmission. The ridge waveguide layer is disposed on the slab layer, typically having a higher refractive index, for precise control of light propagation. The optical waveguide layer is made of lithium niobate. The slab layer has a thickness of 0.1 µm to 5 µm, and the ridge waveguide layer has a thickness of 0.1 µm to 5 µm. The optical waveguide layer is an etched ridge waveguide with a single-crystal structure, having an X-cut, Y-propagation orientation.

The light input port receives laser signals, and the light output port outputs processed optical signals, both optimized for efficient coupling and transmission.

In a preferred embodiment, the light input port and the light output port are grating coupling structures. A grating coupling structure uses a periodic grating structure to couple light waves from free space into a waveguide, or vice versa, via diffraction. Such structures enable efficient light input and output. The coupling efficiency depends on multiple factors, including grating period, depth, shape, and the refractive index of the waveguide. These parameters can be precisely designed to optimize coupling efficiency.

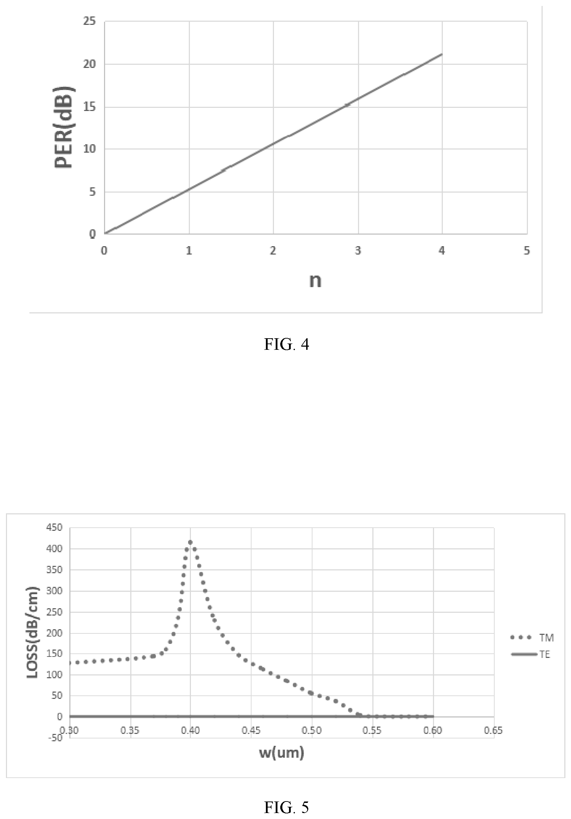

The transmission waveguide segment is the main part of the ridge waveguide layer, configured to filter TM mode light and allow only TE mode light to pass. The connecting waveguide segments are symmetrically arranged at both ends of the transmission waveguide segment. These connecting waveguide segments serve to transmit the laser signal from the light input port to the transmission waveguide segment and, after processing, transmit the optical signal from the transmission waveguide segment to the light output port. It should be noted that, for ease of illustration, only one transmission waveguide segment is shown in this embodiment. In preferred embodiments, a plurality of transmission waveguide segments may be provided; the greater the number of transmission waveguide segments, the higher the extinction ratio of the polarizer, as shown in FIG. 4, where n denotes the number of transmission waveguide segments and PER denotes the extinction ratio of the polarizer.

Upon entering the light input port, the laser signal is transmitted through the connecting waveguide segments to the transmission waveguide segment. Within the transmission waveguide segment, specific designs, such as waveguide size, shape, and material refractive index, enable TM mode light to be filtered, and only TE mode light to be effectively propagated. The processed laser signal is then transmitted to the light output port through the connecting waveguide segment at the other end, thereby completing the entire process.

This design optimizes polarization selectivity and effectively separates light of different polarization states. Precise control of waveguide dimensions and geometry enables efficient optical transmission and a high polarization extinction ratio, which is critical for optical communications, optical information processing, and various optical sensing applications. In addition, the design enhances the bandwidth and signal stability of the optical waveguide, thereby improving the performance and reliability of the entire optical system.

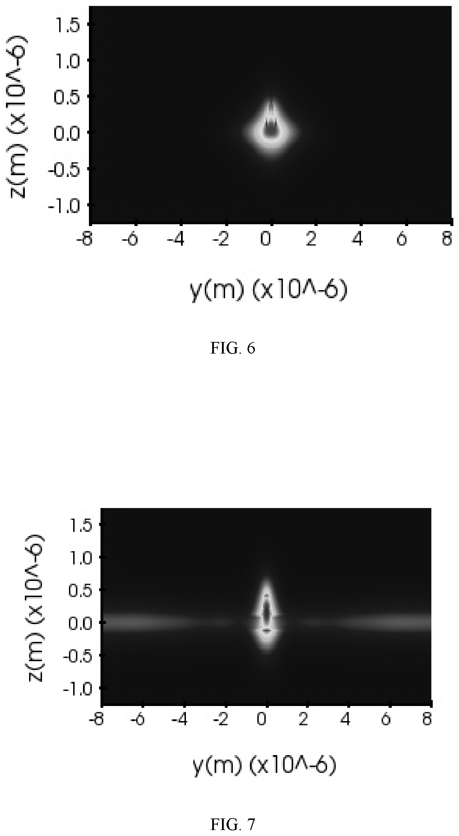

In the present embodiment, a laser signal is received at the light input port and transmitted via the connecting waveguide segments to the transmission waveguide segment. After passing through the transmission waveguide segment, transverse magnetic (TM) mode light undergoes a very high transmission loss, while transverse electric (TE) mode light exhibits a low transmission loss. Accordingly, TM mode light gradually attenuates, and TE mode light continues to propagate, achieving separation of TE and TM components in the input laser signal and yielding pure TE mode light, thereby realizing a polarizing effect. The performance of the polarizer is illustrated in FIGS. 5, 6 and 7. FIG. 5 shows the transmission losses of TE mode light and TM mode light at different ridge waveguide widths, where W denotes a width of the ridge waveguide and LOSS denotes the transmission loss. FIGS. 6 and 7 show the electric field intensity distributions for TE mode light and TM mode light, respectively, at a waveguide width of 0.4 µm. The thin film lithium niobate platform enables reduced device dimensions, facilitating device integration and chip miniaturization. The use of standard, mature semiconductor processes effectively lowers manufacturing costs and improves mass production capability.

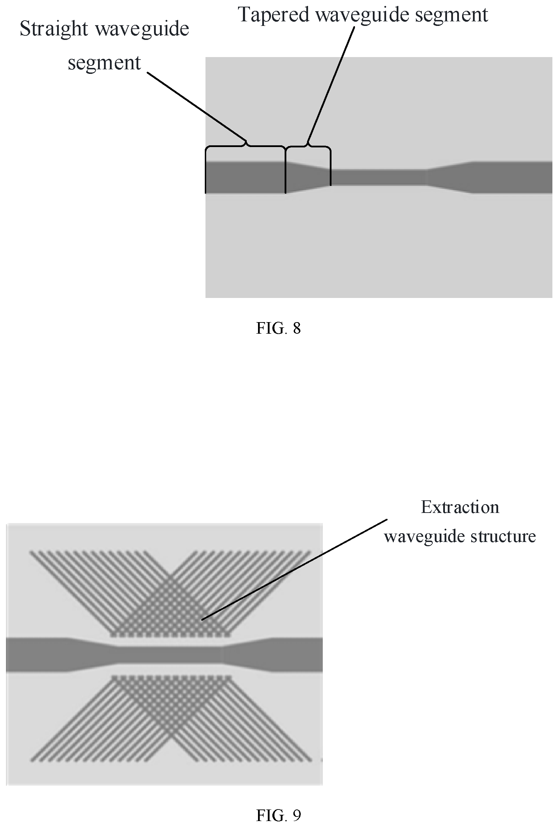

To facilitate laser signal input into the transmission waveguide segment and output after processing, a preferred embodiment, shown in FIG. 8, provides the connecting waveguide segment comprising a straight waveguide segment and a tapered waveguide segment. The straight waveguide segment is connected to the tapered waveguide segment which is in turn connected to the transmission waveguide segment. One end of the tapered waveguide segment has a width matching that of the straight waveguide segment, and the other end has a width matching that of the transmission waveguide segment.

The connecting waveguide segments improve coupling efficiency and reduce transmission loss between waveguide sections. The straight waveguide segment connects the light input port to the tapered waveguide segment, enabling stable, smooth light transmission into the waveguide system. Its simple design with optimized width and refractive index ensures efficient light propagation. The tapered waveguide segment acts as a transition between the straight and transmission waveguide segments, minimizing reflection and scattering induced by abrupt geometric changes. One end of the tapered segment matches the width of the straight segment, while the other matches the transmission segment. This gradual width transition adjusts the mode profile smoothly, reducing mode mismatch and inter-waveguide loss.

The laser signal first propagates through the straight waveguide segment. Upon reaching the tapered waveguide segment, the gradual width taper enables a smooth transition between waveguide geometries, reducing reflection and scattering. Within the tapered waveguide segment, the mode profile gradually adapts to the geometry of the transmission waveguide segment, preserving signal quality and minimizing optical loss. The precisely matched width at the junction allows efficient coupling into the transmission waveguide segment, further reducing mode mismatch and improving coupling efficiency. The tapered transition minimizes inter-waveguide loss and enhances overall waveguide transmission performance by means of this gradient design.

In a preferred embodiment, with reference to FIG. 2 (a cross-sectional view taken along dashed line A in FIG. 1), the polarizer further comprises a buffer layer disposed between the substrate layer and the optical waveguide layer. The buffer layer and the upper cladding layer are each composed of silicon oxide or silicon dioxide. The buffer layer and the upper cladding layer each have a thickness greater than 3 µm. The thicknesses of the buffer layer and the upper cladding layer may be the same or different.

The buffer layer is arranged between the substrate layer and the optical waveguide layer, primarily to reduce mechanical stress between dissimilar materials. Due to differences in thermal expansion coefficients, the buffer layer alleviates thermal stress and mitigates temperature-induced damage. It also improves the fabrication quality of the optical waveguide layer by providing a smooth, uniform base and reducing defects and inhomogeneities. Additionally, the buffer layer prevents impurity diffusion from the substrate into the optical waveguide layer, maintaining high purity and low optical loss.

Silicon oxide (SiO) and silicon dioxide (SiO₂) are common materials for the buffer layer and the upper cladding layer. These materials exhibit low optical absorption and excellent chemical stability, making them suitable for high-performance optical applications.

In designing this multilayer structure, the thermal expansion coefficients of different materials must be considered. Mismatched coefficients may induce significant mechanical stress, compromising device stability and service life. The buffer layer and upper cladding layer serve not only mechanical stability but also influence light propagation. Adjusting their thickness and refractive index optimizes waveguide mode characteristics, such as reducing mode dispersion and enhancing mode confinement. No specific limitations are imposed in this embodiment. To ensure adequate mechanical strength and optical performance, the buffer layer and the upper cladding layer each have a thickness greater than 3 µm in a preferred embodiment. The thickness is selected according to the required stress relief and optical propagation characteristics. The thicknesses may be the same or different, depending on design requirements such as refractive index contrast and thermal expansion matching, which are not specifically limited herein.

In a preferred embodiment, as shown in FIG. 9, the polarizer further comprises an extraction waveguide structure, wherein the transmission waveguide segment is disposed between the extraction waveguide structures. The extraction waveguide structure is configured to extract transverse magnetic (TM) mode light from the laser signal. The extraction waveguide structure has a width of 0.2 µm to 0.5 µm and is spaced from the transmission waveguide segment by 2 µm to 3 µm.

The extraction waveguide structure is specifically designed to extract TM mode light. TM mode is defined such that the magnetic field component of an electromagnetic field in an optical wave is predominantly oriented transversely to the waveguide. This configuration enhances polarization selectivity, enabling more effective discrimination and processing of different polarization modes. The spacing of 2 µm to 3 µm ensures sufficient optical coupling and avoids unwanted cross-coupling.

The ability of the extraction waveguide structure to extract TM mode light mainly arises from the guiding effect of its geometry and refractive index distribution on electromagnetic waves. In waveguides, TM mode is defined such that the electric field component of an electromagnetic wave predominantly longitudinal (along the propagation direction), while the magnetic field component lies in the transverse plane perpendicular to the propagation direction. Key factors enabling TM mode extraction are as follows:
1. Waveguide geometry: A waveguide comprises layers of differing refractive indices. Reflection at material interfaces modifies electric and magnetic field distributions. Tailored interface design optimizes a certain mode propagation (e.g. TM mode). Waveguide width and height determine optical confinement, influencing TM mode formation and stability. Specific dimensions can make TM mode more stable and efficient.
2. Refractive index distribution: Refractive index contrast (contrast ratio) governs optical confinement. Higher contrast improves TM mode confinement. The refractive index profile affects mode dispersion; appropriate design reduces TM mode dispersion and improves transmission efficiency.
3. Polarization dependence:
   The electric field component of a TM mode is predominantly longitudinal, requiring waveguide designs that efficiently support and maintain this electric field distribution and minimize loss. The magnetic field component of the TM mode lies in the transverse plane perpendicular to the waveguide propagation direction. The waveguide structure is accordingly designed to support this field distribution and minimize magnetic-field losses.
4. Waveguide material selection:
   Optical properties of waveguide material, including absorption and scattering losses, significantly affect TM mode efficiency. Proper material selection optimizes TM mode propagation.

Dimensional precision of the extraction waveguide structure is critical; small deviations may cause mode mismatch or increased loss. In summary, precise design and fabrication enable effective TM mode extraction. The material composition of the extraction waveguide structure also affects the polarizer extinction ratio, as detailed in subsequent embodiments.

### Embodiment 2:

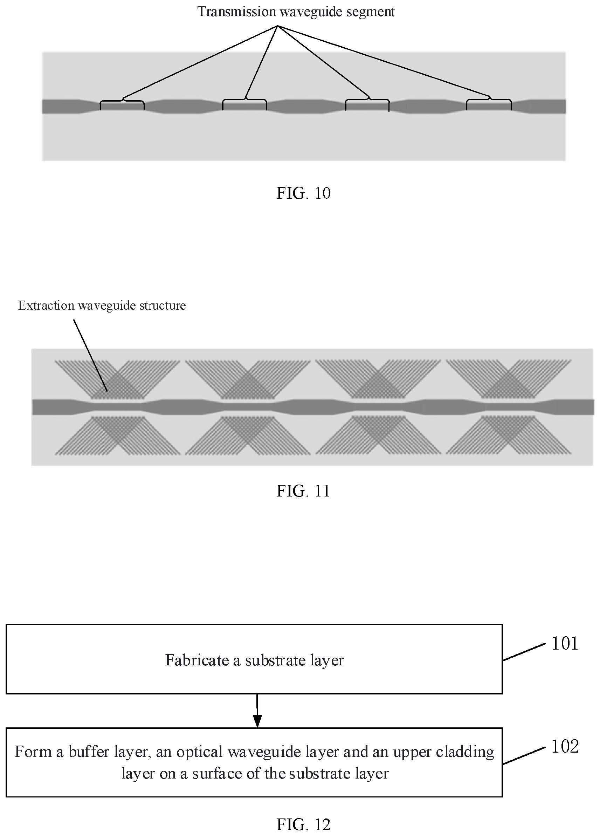

In Embodiment 1, the polarizer achieves an extinction ratio of 5.28 dB with a single transmission waveguide segment. As shown in FIG. 1, the extinction ratio increases with the number of repeated structures of Embodiment 1. The present embodiment is illustrated in the plan view of FIG. 10; its waveguide cross-section corresponds to that of FIG. 2 in Embodiment 1. The structure is formed by repeating the structure of Embodiment 1 four times, yielding an extinction ratio of 21.1 dB.

The detailed structure of the thin film lithium niobate polarizer is described in Embodiment 1 and is not repeated herein.

### Embodiment 3:

Embodiment 2 proposes a structure formed by repeating the structure of Embodiment 1 four times. As shown in FIG. 11, when the extraction waveguide structure is made of lithium niobate, has a width of 0.2 µm to 0.5 µm, a thickness of 0.3 µm, and a distance of 2 µm to 3 µm between its bottom and the top of the transmission waveguide segment, the polarizer of this embodiment achieves an extinction ratio of up to 27.4 dB.

When the extraction waveguide structure is made of Au and Ti, comprising a 50 nm titanium layer and a 1 µm gold layer, has a width of 0.2 µm to 0.5 µm, and is spaced 2 µm to 3 µm from the top of the transmission waveguide segment, the polarizer of this embodiment achieves an extinction ratio of up to 34.4 dB.

The detailed structure of the thin film lithium niobate polarizer is described in Embodiment 1 and will not be repeated herein.

### Embodiment 4:

Embodiment 1 discloses a thin film lithium niobate polarizer. The present embodiment describes a method for manufacturing the thin film lithium niobate polarizer. As shown in FIG. 12, the method comprises:
Step 101: Fabricating a substrate layer.

The substrate layer may be formed from elemental semiconductor materials (e.g., silicon, germanium), III-V compound semiconductors, II-VI compound semiconductors, organic semiconductors, or other known semiconductor materials.

Step 102: Forming a buffer layer, an optical waveguide layer, and an upper cladding layer on a surface of the substrate layer.

The buffer layer, optical waveguide layer, and upper cladding layer may be formed by thin-film deposition techniques, including but not limited to chemical vapor deposition (CVD), plasma-enhanced chemical vapor deposition (PECVD), atomic layer deposition (ALD), or combinations thereof.

The buffer layer provides an interface and adhesion between different material layers, mitigating issues arising from material mismatch. CVD, PECVD, or ALD may be used for buffer layer deposition.

The optical waveguide layer is critical for laser signal transmission; its fabrication requires careful process control to ensure the stable transmission of an optical signal. CVD, PECVD, or ALD may also be employed, selected according to desired material properties and layer thickness.

The upper cladding layer covers and protects the optical waveguide structure, providing additional mechanical support and electrical insulation. CVD, PECVD, or ALD may be used to achieve suitable cladding properties and conformal coverage. The deposition process is selected based on material, properties, and thickness requirements. Process combinations may be adjusted according to specific design requirements to ensure that the thin film achieves the desired quality and performance. No specific limitations are imposed in this embodiment.

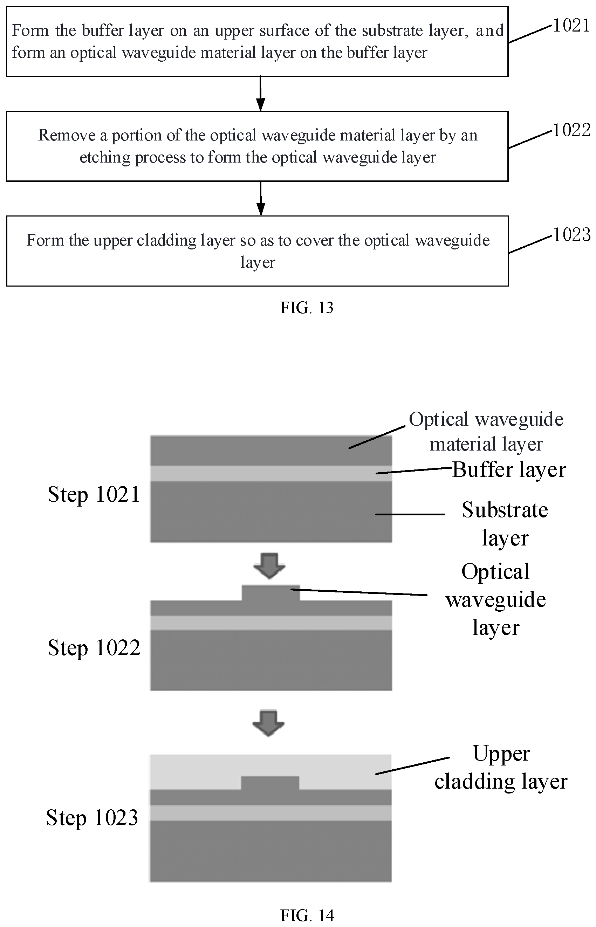

Specifically, as shown in FIGS. 13 and 14, Step 102 comprises:
Step 1021: Forming the buffer layer on an upper surface of the substrate layer, and forming an optical waveguide material layer on the buffer layer.

The buffer layer reduces mechanical stress between dissimilar materials. It alleviates thermal stress caused by mismatched thermal expansion coefficients and reduces temperature-induced damage. It also improves the fabrication quality of the optical waveguide layer by providing a smooth, uniform base and reducing defects and inhomogeneities in the optical waveguide layer. Additionally, the buffer layer prevents impurity diffusion from the substrate into the optical waveguide layer, maintaining high purity and low optical loss of the optical waveguide layer. Silicon oxide (SiO) and silicon dioxide (SiO₂) are typical materials for the buffer layer, exhibiting low absorption and excellent chemical stability suitable for high-performance optical applications.

The fabrication process may include coating, deposition, etching and other processes. For example, the buffer layer may be deposited by physical vapor deposition (PVD) or CVD, followed by deposition of the optical waveguide material layer by means of similar deposition or other suitable processes.

Step 1022: Removing a portion of the optical waveguide material layer by an etching process to form the optical waveguide layer.

The etching process includes inductively coupled plasma (ICP) etching or reactive ion etching (RIE). The optical waveguide material layer is removed through inductively coupling plasma etching or reactive ion etching to form the optical waveguide layer.

ICP etching uses high-energy plasma ions from inductively coupling plasma to etch the surface of materials to remove excess material. In this process, an electromagnetic field excites a gas to generate plasma, and high-velocity ions collide with the surface of the optical waveguide material at high speed, etching the waveguide material.

RIE involves introducing a gas into a vacuum environment and ionizing the gas to etch the waveguide material. One of the advantages of RIE is that it can achieve high material selectivity by selecting different gases and process conditions. Specifically, no further explanation will be provided in this embodiment.

Step 1023: Forming an upper cladding layer to cover the optical waveguide layer.

The upper cladding layer is formed over the optical waveguide layer. Silicon oxide (SiO) and silicon dioxide (SiO₂) are suitable materials, with low absorption and good chemical stability for high-performance optical applications.

The detailed structure of the film lithium niobate polarizer is described in Embodiment 1 and is not repeated herein.

The above descriptions are only preferred embodiments of the present invention and are not intended to limit the present invention. Any modifications, equivalent substitutions, and improvements made within the spirit and principles of the present invention shall fall into the scope of protection of the present invention.

## Claims

1. A thin film lithium niobate polarizer, **characterized in** comprising a substrate layer, an optical waveguide layer and an upper cladding layer, the optical waveguide layer being disposed between the substrate layer and the upper cladding layer;
the optical waveguide layer comprises a light input port, a light output port, a slab layer and a ridge waveguide layer, the ridge waveguide layer being disposed on the slab layer; the ridge waveguide layer comprises at least one transmission waveguide segment, with connecting waveguide segments symmetrically connected to both ends of the transmission waveguide segment;
the light input port is configured to receive a laser signal and transmit the laser signal via the connecting waveguide segments to the transmission waveguide segment; the transmission waveguide segment is configured to filter transverse magnetic mode light from the laser signal and output transverse electric mode light from the laser signal via a further connecting waveguide segment and the light output port.

2. The thin film lithium niobate polarizer according to claim 1, wherein the connecting waveguide segment comprises a straight waveguide segment and a tapered waveguide segment, the straight waveguide segment being connected to the tapered waveguide segment, and the tapered waveguide segment being connected to the transmission waveguide segment;
one end of the tapered waveguide segment has a width matching that of the straight waveguide segment, and the other end has a width matching that of the transmission waveguide segment.

3. The thin film lithium niobate polarizer according to claim 1, further comprising a buffer layer disposed between the substrate layer and the optical waveguide layer;
the buffer layer and the upper cladding layer are each formed of silicon oxide or silicon dioxide;
the buffer layer and the upper cladding layer each has a thickness greater than 3 µm.

4. The thin film lithium niobate polarizer according to claim 1, further comprising an extraction waveguide structure, the transmission waveguide segment being disposed between the extraction waveguide structures;
the extraction waveguide structure is configured to extract transverse magnetic mode light from the laser signal; the extraction waveguide structure has a width of from 0.2 µm to 0.5 µm and is spaced from the transmission waveguide segment by from 2 µm to 3 µm.

5. The thin film lithium niobate polarizer according to claim 4, wherein the extraction waveguide structure is formed of Au and Ti.

6. The thin film lithium niobate polarizer according to claim 1, wherein a refractive index of the upper cladding layer is lower than that of the optical waveguide layer.

7. The thin film lithium niobate polarizer according to claim 1, wherein the optical waveguide layer is formed of lithium niobate; the slab layer has a thickness of from 0.1 µm to 5 µm, and the ridge waveguide layer has a thickness of from 0.1 µm to 5 µm.

8. The thin film lithium niobate polarizer according to claim 1, wherein the light input port and the light output port are grating coupling structures.

9. The thin film lithium niobate polarizer according to claim 1, wherein the substrate layer is formed of an elemental semiconductor material, a III-V compound semiconductor material, a II-VI compound semiconductor material or an organic semiconductor material.

10. The thin film lithium niobate polarizer according to claim 1, wherein the optical waveguide layer is an etched ridge waveguide having a single-crystal structure with an X-cut, Y-propagation orientation.

11. A method of manufacturing a thin film lithium niobate polarizer, the method being for manufacturing the thin film lithium niobate polarizer according to any one of claims 1 to 10 and comprising:
fabricating a substrate layer;
forming a buffer layer, an optical waveguide layer and an upper cladding layer on a surface of the substrate layer.

12. The method of manufacturing a thin film lithium niobate polarizer according to claim 11, wherein forming the buffer layer, the optical waveguide layer and the upper cladding layer on the surface of the substrate layer comprises:
forming the buffer layer on an upper surface of the substrate layer;
forming an optical waveguide material layer on the buffer layer;
removing a portion of the optical waveguide material layer by an etching process to form the optical waveguide layer;
forming the upper cladding layer so as to cover the optical waveguide layer.

13. The method of manufacturing a thin film lithium niobate polarizer according to claim 12, wherein the etching process comprises inductively coupled plasma etching or reactive ion etching.
